# EUROPÄISCHE PATENTSCHRIFT

(11) **EP 2 163 221 B1**
(45) Veröffentlichungstag und Bekanntmachung des Hinweises auf die Patenterteilung: **13.12.2017**
(21) Anmeldenummer: 08016254.8
(22) Anmeldetag: 16.09.2008
(51) Int. Cl.: A61C 8/00

(54) **Dentalimplantat mit Minimalkern**
Dental implant with minimal core
Implant dentaire doté d'un noyau minimal

(43) Veröffentlichungstag der Anmeldung: 17.03.2010
(73) Patentinhaber: Straumann Holding AG, 4002 Basel (CH)
(72) Erfinder: Zucker, Arik, 8003 Zürich (CH)
(74) Vertreter: Schaad, Balass, Menzl & Partner AG

(56) Entgegenhaltungen:
- EP-A- 1 733 698
- EP-A- 1 818 318
- WO-A-01/34056
- WO-A-03/045268
- WO-A-2008/006868
- DE-A1-102004 055 831
- US-A1- 2002 160 334

## Beschreibung

Die vorliegende Erfindung betrifft ein einteiliges Dentalimplantat mit einem Verankerungsteil zur Verankerung im Knochen und einem Aufbauteil zur Aufnahme eines zu applizierenden Elementes, wie einem Abutment oder einer Kronen-, Brücken- oder Prothesenkonstruktion.

Zwar sind die zweiteiligen Dentalimplantate heute nach wie vor sehr beliebt, sie weisen jedoch den Nachteil auf, dass sie aufgrund der Vielzahl der beteiligten Komponenten u.a. eine geringere mechanische Stabilität als einteilige Dentalimplantate haben. Überdies weisen einteilige Dentalimplantate den Vorteil auf, dass sie keinen Spalt zwischen Implantat und dem applizierenden Element aufweisen und damit die Gefahr einer Ansammlung von Bakterien im Spalt, die beispielsweise Parodontitis oder Gingivitis verursachen können, nicht besteht.

Auch bei einer noch so guten Implantation eines einteiligen Implantates ist es unumgänglich, dass grössere oder kleinere Korrekturen am Implantat durch Beschleifen des koronalen Teils, d.h. des Aufbauteils, vorgenommen werden müssen, um sicher zu stellen, dass die darauf aufgesetzten Prothetikelemente gut passen. Gattungsgemäße Dentalimplantate sind aus den WO2008006868, WO0134056 und DE102004055831 bekannt. Das Beschleifen des Aufbauteils des Implantates kann jedoch zur Folge haben, dass dieses Aufbauteil stellenweise zu dünn wird, was vom Zahnarzt visuell schwer feststellbar ist. Dadurch ist die Gesamtstabilität nicht mehr gewährleistet, was unter Belastung zu einem Bruch führen kann.

Überdies weisen Implantate mit einem Winkel zwischen Verankerungsteil und Aufbauteil den Nachteil auf, dass der Zahnarzt beim Eindrehen des Implantates wegen des Winkels immer nur alle 360° die korrekte Endposition des Implantates erreicht, was dazu führen kann, dass er ein Implantat beispielsweise 270° überdrehen muss. Dies könnte unnötig das Knochengewebe verletzen und kann zu Nekrosen führen, die das Einwachsen des Implantates negativ beeinflussen. Zudem könnte das Implantat an den Nachbarzähnen anecken, was zur Folge hätte, dass es gar nicht eingesetzt werden könnte.

Aufgabe der vorliegenden Erfindung ist es somit, ein Warnsystem bereitzustellen, das den Zahnarzt darauf hinweist, dass eine weitere Beschleifung des Aufbauteils zu einem Bruch unter Belastung führen könnte.

Die Aufgabe wird gelöst durch ein Dentalimplantat gemäss Anspruch 1 und durch ein Verfahren gemäß Anspruch 14. Weitere bevorzugte Ausführungsformen sind Gegenstand der abhängigen Ansprüche 2 bis 13 . Die vorliegende Erfindung betrifft ein einteiliges einstückiges Keramik-Dentalimplantat mit einem Verankerungsteil zur Verankerung im Knochen und mit einem Aufbauteil zur Aufnahme eines zu applizierenden Elementes. Ein solches zu applizierendes Element ist beispielsweise ein Abutment oder eine Kronen-, Brücken- oder Prothesenkonstruktion. Der Aufbauteil weist wenigstens einen Kern und eine Deckschicht auf, wobei der wenigstens eine Kern und die Deckschicht visuell voneinander verschieden sind. Der Kern ist dabei der Teil des Aufbauteils des Implantates, der minimal benötigt wird, um eine ausreichende Stabilität des Implantates zu gewährleisten. Der minimale Durchmesser hängt dabei von der Indikation, des Materials und der Verarbeitung ab. Im Gegensatz dazu, stellt die Deckschicht bezüglich der Stabilität des Implantates eine optionale Schicht dar, die gegebenenfalls vollständig abgeschliffen werden darf. Idealerweise wird die Dicke der Deckschicht so gewählt, dass bei einer Standardimplantation möglichst wenig abgeschliffen werden muss, um die Patientenvisite nicht unnötig zu verlängern. Dadurch, dass der wenigstens eine Kern und die Deckschicht visuell voneinander unterscheidbar sind, implantiert der Zahnarzt ein Implantat mit einem integrierten Warnsystem, das ihn beim Beschleifen des Aufbauteils darauf hinweist, dass bei einem Weiterschleifen die Stabilität nicht mehr gewährleistet wäre.

Dabei gibt es verschiedene Möglichkeiten, um sicherzustellen, dass die Deckschicht visuell von dem wenigstens einen Kern zu unterscheiden ist. Unter dem Ausdruck "visuell" wird verstanden, dass der Unterschied zwischen der Deckschicht und dem wenigstens einen Kern von blossem Auge erkennbar ist. Dies kann beispielsweise eine unterschiedliche Farbe oder leicht abweichende Farbnuance sein.

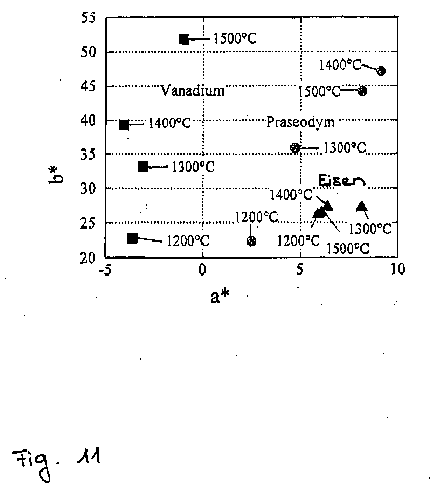

Beispielsweise kann der wenigstens eine Kern Farbpigmente enthalten, die nicht oder in anderer Menge in der Deckschicht vorhanden sind. Solche Farbpigmente werden vorzugsweise aus der Gruppe bestehend aus Eisenoxid (Fe₂O₃), Eisennitrat (Fe(NO₃)₃), Bismuthoxid(Bi₂O₃₎, Ceroxid (CeO₂), Yttriumoxid (Y₂O₃), Erbiumoxid (Er₂O₃), Praesodymoxid (Pr₆O₁₁), Praesodymnitrat (Pr(NO₃)₃), Zinkoxid (ZnO), Vanadiumoxysulfat (VOSO₄) und Mischungen davon ausgewählt. Für den mindestens einen Kern können ausserdem auch metallische Kupfer-Nanopartikel, allenfalls als Mischung mit einem oder mehreren der oben genannten Pigmente, eingesetzt werden. In einer besonders bevorzugten Ausführungsform enthält der wenigstens eine Kern 0.01 to 0.2 mol% und die Deckschicht 0.01 to 0.2 mol% der obigen Farbpigmente. Die Konzentration der Farbpigmente hängt nicht nur von dm Farbpigment als solches ab, sondern auch von der Sintertemperatur , da - wie in Figur 11 gezeigt - der Gelb/Blau - respektive der Grün/Rot-Anteil je nach Sintertemperatur variiert (der b*-Wert entspricht dem Gelb/Blau-Anteil, wobei ein tiefer Wert einem hohen Blau-Anteil und ein hoher Wert einem hohen Gelb-Anteil entspricht; der a*-Wert entspricht dem Grün/Rot-Anteil, wobei ein tiefer oder negativer Wert einem hohen Grün-Anteil und ein hoher Wert einem hohen Rot-Anteil entspricht). Beispielsweise aber nicht gemäß der Erfindung ist es möglich, dass der wenigstens eine Kern von der Deckschicht akustisch zu unterscheiden ist. Unter dem Ausdruck "akustisch" wird verstanden, dass das Geräusch des Bohrers beim Beschleifen des Aufbauteils verschieden ist, je nachdem, ob der wenigstens eine Kern oder die Deckschicht beschliffen wird, wobei der Unterschied so deutlich ist, dass er vom Zahnarzt sofort wahrnehmbar ist Der akustisch hörbare Unterschied wird dadurch erzeugt, dass der wenigstens eine Kern eine Härte aufweist, die von der Deckschicht verschieden ist. Sobald der Bohrer auf das härtere Material trifft, ist das hörbare Geräusch höher als vorher.

Als Material für die Deckschicht wird vorzugsweise Aluminiumoxid (Al₂O₃) verwendet. Aluminiumoxid ist eine durchsichtige Keramik und eignet sich daher aus ästhetischen Gründen für die Deckschicht. Als Material für den mindestens einen Kern wird vorzugsweise teilstabilisiertes, polykristallines tetragonales Zirkonoxid (Tetragonal zirconia polycrystal, TZP), insbesondere Yttrium stabilisiertes TZP (Y-TZP)verwendet. Dieses Material zeichnet sich durch ein optimales Verhalten bezüglich Härte und Bruchstabilität aus, was für den Kern natürlich besonders wichtig ist.

In einer besonders bevorzugten Ausführungsform unterscheiden sich der wenigsten eine Kern und die Deckschicht sowohl visuell als auch akustisch voneinander, d.h. der Zahnarzt hat sogar ein doppeltes Warnsystem. Dies kann beispielsweise durch Zugabe von Farbpigmenten und Verstärkung des Kernmaterials erreicht werden.

Falls das Implantat ein gerades Aufbauteil haben soll, wird vorzugsweise ein erfindungsgemässes Dentalimplantat mit genau einem Kern und einer Deckschicht verwendet, während bei einem abgewinkelten Aufbauteil ein erfindungsgemässes Dentalimplantat mit mehreren, vorzugsweise drei Kernen und einer Deckschicht verwendet wird.

In einer weiteren bevorzugten Ausführungsform enthält das erfindungsgemässe Dentalimplantat drei oder mehr Kerne und eine Deckschicht, die visuell voneinander unterscheidbar sind. Das heisst, dass die wenigstens drei Kerne alle unterschiedliche Farben oder Farbnuancen aufweisen und sich zusätzlich von der Deckschicht unterscheiden. Es ist aber auch möglich, dass die wenigstens drei Kerne alle die gleiche Farbe aufweisen, die von der Deckschicht verschieden ist. Das Implantat gemäss dieser bevorzugten Ausführungsform ermöglicht nun eine maximale Eindrehgenauigkeit, da der entsprechende Aufbauteil nach dem Eindrehen vom Zahnarzt in situ im Mund geschliffen wird. Der Zahnarzt erhält durch die drei vorgegebenen Kerne klare Vorgaben, wie weit er schleifen darf. Durch die maximale Eindrehgenauigkeit wird das Knochengewebe geschont und eine sehr gute Einheilrate erzielt. Diese drei oder mehr Kerne sind vorzugsweise mit einem Neigungswinkel von 5 bis 25° von der Mittelachse weggerichtet angeordnet. In einer bevorzugten Ausführungsform beträgt der Neigungswinkel 15°. Alternativ ist es auch hier möglich, dass sich die drei Kerne und die Deckschicht akustisch voneinander unterscheiden, da sie unterschiedliche Härten aufweisen.

Die erfindungsgemässen Dentalimplantate sind vorzugsweise einstückig aus einer biokompatiblen Keramik hergestellt. Das einstückige Implantat gewährleistet eine hohe Stabilität, da es keine Materialunterschiede oder Mikrospalten aufweist. Vorzugsweise handelt es sich bei der biokompatiblen Keramik um eine stabilisierte Zirkonoxidkeramik, besonders bevorzugt um 92.1 bis 93.5 Gew.% ZrO₂ und 4.5 bis 5.5 Gew.% Y₂O₃ und 1.8 bis 2.2 Gew.% HfO₂. Eine derartig stabilisierte Zirkonoxidkeramik weist insbesondere bei Herstellung durch heissisostatisches Pressen oder durch Sintern mit anschliessender heissisostatischer Nachverdichtung eine ausserordentlich hohe mechanische Stabilität und Festigkeit auf. Die Deckschicht kann dabei auf den wenigstens einen Kern, der sich visuell und/oder akustisch von der Deckschicht unterscheidet gespritzt und der so erhaltene Rohling gesintert werden. Dadurch wird die gewünschte Einstückigkeit erzielt.

In einer weiteren Ausführungsform ist zwischen dem wenigstens einen Kern und der Deckschicht eine Zwischenschicht angebracht, welche die Funktion einer Übergangsschicht hat. D.h. entweder weist sie eine von der Deckschicht und dem wenigstens einen Kern unterschiedliche Farbe auf oder sie hat eine Härte, die zwischen der Härte der Deckschicht und der Härte des wenigstens einen Kerns liegt.

In einer weiteren Ausführungsform kann die Deckschicht nicht nur auf dem Aufbauteil sondern auch auf dem Verankerungsteil angebracht werden. Dadurch wird die Herstellung eines erfindungsgemässen Implantats einfacher und kostengünstiger.

Der Verankerungsteil ist durch eine geeignete abtragende Vorbehandlung oder durch eine geeignete Beschichtung an seiner Aussenoberfläche behandelt, um so eine gute Verbundosteogenese nach der Implantation zu erreichen. Der Verankerungsteil kann beispielsweise an seiner Oberfläche silanisiert oder hydroxyliert sein. Besonders bevorzugt ist er durch ein Abtragungsverfahren aufgeraut und mit Flusssäure geätzt. Damit weist das Implantat eine in der EP 07 007 950.4 beschriebe Oberflächenstruktur auf, auf die Bezug genommen wird.

Weitere Merkmale und Vorteile ergeben sich aus der folgenden Beschreibung bevorzugter Ausführungsbeispiele unter Bezugnahme auf die Zeichnungen. Es zeigen:
- Fig. 1: ein einteiliges, gerades Dentalimplantat gemäss dem Stand der Technik;
- Fig. 2: ein einteiliges, abgewinkeltes Dentalimplantat gemäss dem Stand der Technik;
- Fig. 3: ein einteiliges Dentalimplantat gemäss einer ersten Ausführungsform der Erfindung;
- Fig. 4: einen Schnitt durch das Implantat gemäss Fig. 3;
- Fig. 5: ein Dentalimplantat gemäss Fig. 3 im Kiefer implantiert;
- Fig. 6: ein Dentalimplantat gemäss Fig. 5 in beschliffener Form im Kiefer implantiert;
- Fig. 7: ein Dentalimplantat gemäss Fig. 6 mit aufgesetzter Krone;
- Fig. 8: ein Dentalimplantat gemäss einer zweiten Ausführungsform mit drei abgewinkelten Kernen;
- Fig. 9: einen Schnitt durch das Implantat gemäss Figur 8;
- Fig. 10: das Dentalimplantat gemäss Figur 8 im Kiefer implantiert;
- Fig. 11: Abhängigkeit der Farbpigmente von der Sinterungstemperatur.

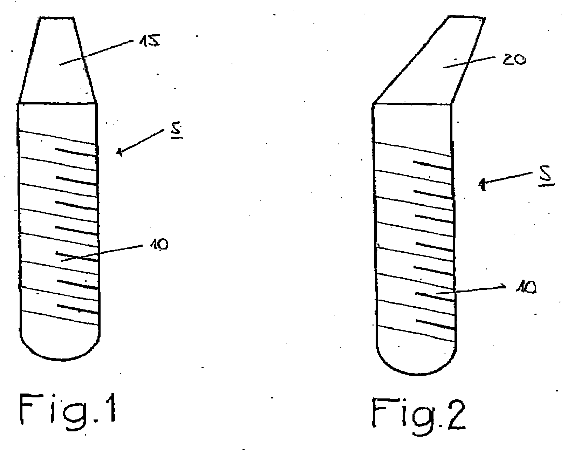

Fig. 1 zeigt ein einteiliges Dentalimplantat 5, wie es aus dem Stand der Technik bekannt ist. Das Dentalimplantat 5 hat einen Verankerungsteil 10 und einen Aufbauteil 15 zur Aufnahme eines zu applizierenden Elementes, wie beispielsweise einer Krone, Der Verankerungsteil 10 ist gewindeförmig. Dadurch wird die Oberfläche und damit die Kontaktfläche des Verankerungsteils 10 erhöht, womit eine gute Osseointegration gewährleistet wird. Alternativ könnte das Implantat aber auch zum Einschlagen sein und entsprechend der Verankerungsteil kein Gewinde aufweisen. Der Aufbauteil 15 ist gerade, d.h. parallel zur Mittelachse des Verankerungsteils.

Fig. 2 zeigt ein einteiliges Dentalimplantat 5 mit einem Verankerungsteil 10 und einem Aufbauteil 15 zur Aufnahme eines zu applizierenden Elementes gemäss dem Stand der Technik. Im Gegensatz zu dem in Figur 1 gezeigten Dentalimplantat ist der Aufbauteil 20 abgeschrägt, d.h. er weist einen Neigungswinkel von bis zu 25% bezüglich der Mittelachse des Verankerungsteils 10 auf. Ein abgewinkeltes Implantat ist unter anderem dazu geeignet, in einen bezüglich der Schneidezähne abgewinkelten Kieferkamm eingesetzt zu werden.

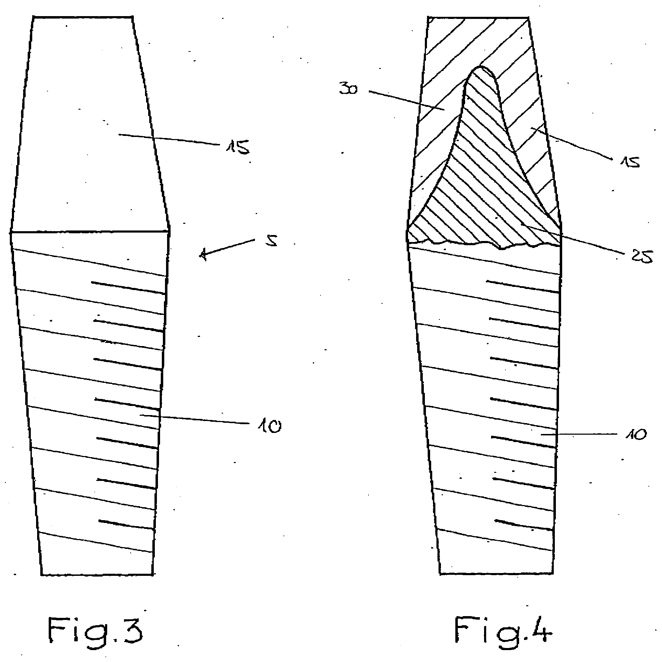

Fig. 3 zeigt eine erste Ausführungsform des erfindungsgemässen Implantates 5. Es weist einen Verankerungsteil 10 zur Verankerung im Knochen und einen Aufbauteil 15 zur Aufnahme eines zu applizierenden Elementes auf. Der Verankerungsteil 10 weist einen Gewindeabschnitt und vorzugsweise ein abgerundetes unteres Ende auf. Der Verankerungsteil 10 geht an seinem oberen Ende über einen leicht aussenkonisch nach aussen aufgeweiteten Abschnitt in einen vorzugsweise einstückig damit ausgebildeten Aufbauteil 15, der in der Verlängerung der Längsachse des Gewindeabschnittes verläuft. Der Aufbauteil 15 besitzt eine kegelstumpfförmige Form auf, die nach der Implantation vom Zahnarzt beschliffen wird, um die finale Form des Aufbauteils 15 zu erhalten. Der Aufbauteil 15 weist wenigstens einen Kern 25 und eine Deckschicht 30 auf, wobei der Kern 25 und die Deckschicht 30 sich visuell unterscheiden (vgl. Fig. 4), d.h. durch farbliche Unterschiede, die vom Zahnarzt per Auge wahrgenommen werden. Dadurch hat der Zahnarzt die Möglichkeit, das Implantat individuell zu beschleifen, ohne Sorge haben zu müssen, dass die Stabilität des Implantates nicht mehr gewährleistet ist, da er durch die Farbänderung darauf hingewiesen wird, wann er nicht mehr weiter schleifen darf. Alternativ ist es auch möglich, dass sich der wenigstens eine Kern 25 und die Deckschicht 30 beim Beschleifen akustisch voneinander unterscheiden, da sie unterschiedliche Härten aufweisen. Besonders bevorzugt ist die Kombination der visuellen und akustischen Unterscheidbarkeit. Das Prothetikelement wird nach dem Beschleifen aufzementiert. Alternativ kann der wenigstens eine Kern zusätzlich eine Öffnung mit oder ohne Gewinde aufweisen, die eine Befestigung eines Prothetikelementes erleichtert,

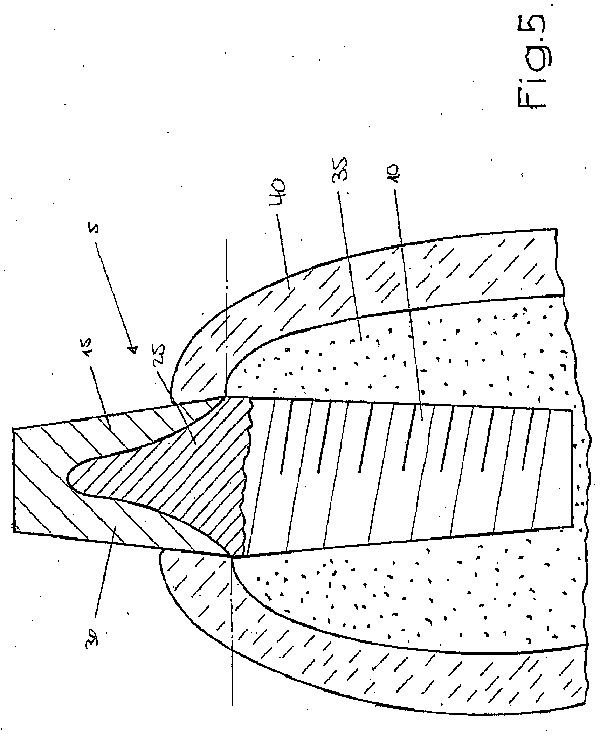

Fig. 5 zeigt einen Schnitt der ersten Ausführungsform des erfindungsgemässen Implantates 5, das im Kiefer implantiert wurde. Der Verankerungsteil 10 ist im Knochengewebe 35 implantiert. Der Aufbauteil 15 wurde dabei noch nicht beschliffen, d.h. für den Zahnarzt ist nur die Deckschicht 30 erkennbar.

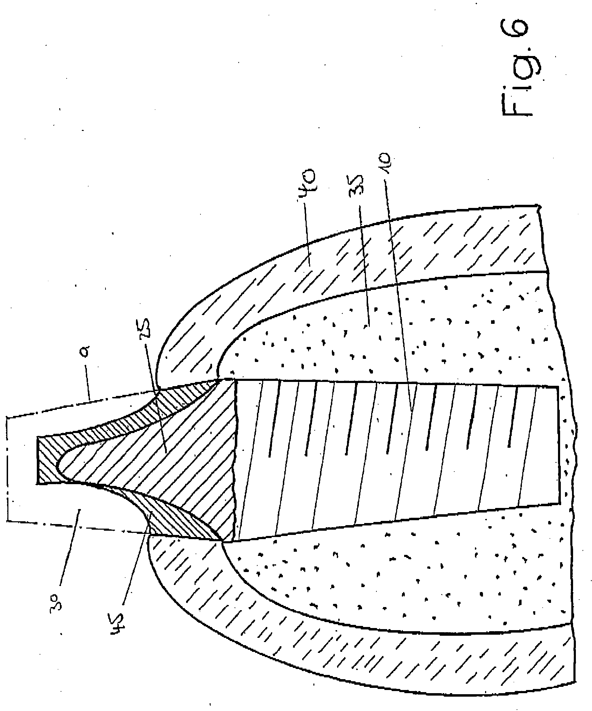

Fig. 6 zeigt das in Fig. 5 gezeigte Implantat nach dem Beschleifen, wobei die ursprüngliche Form durch die Linie a noch angedeutet ist. Der beschliffene Aufbauteil 45 entspricht den individuellen Bedürfnissen des Patienten und gewährleistet die optimale Stabilität des Implantates. Der Kern 25, der sich visuell und/oder akustisch von der Deckschicht 30 unterscheidet, wurde dabei nicht beschliffen.

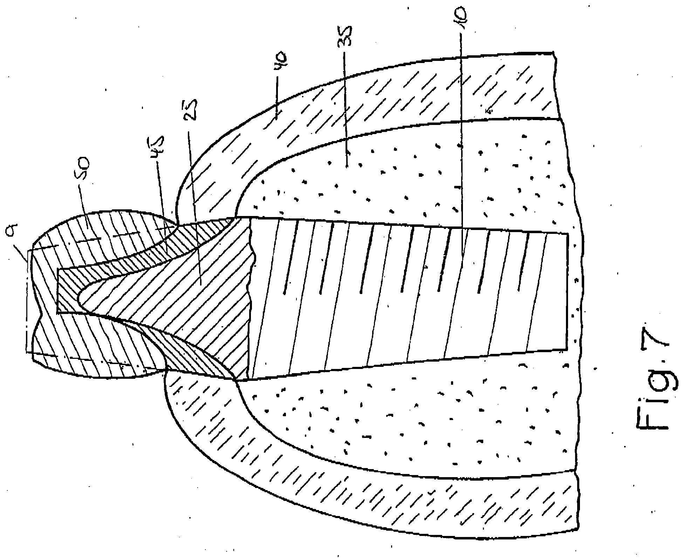

Fig. 7 zeigt das in Fig. 6 gezeigte Implantat, dessen beschliffenes Aufbauteil 45 mit einer Krone 50 versorgt wurde. Die ursprüngliche Form des Implantates ist wiederum durch die Linie a zum besseren Verständnis angedeutet.

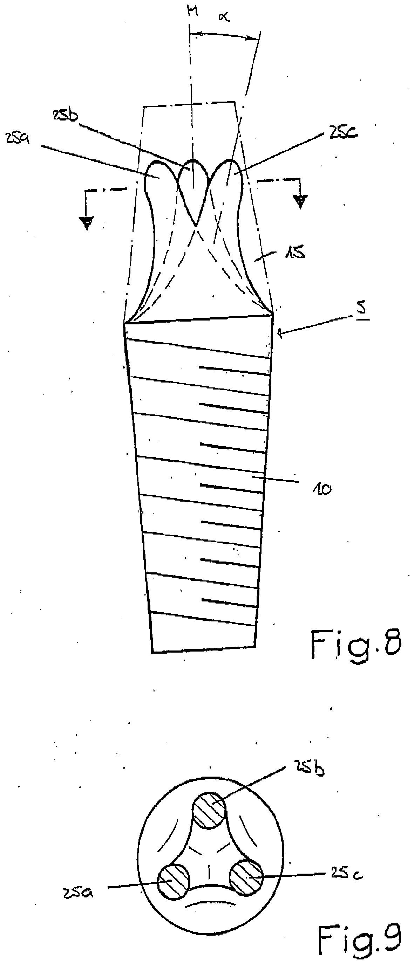

Fig. 8 zeigt eine zweite Ausführungsform des erfindungsgemässen Implantates 5. Das Implantat 5 weist wiederum einen Verankerungsteil 10 zur Verankerung im Knochen und einen Aufbauteil 15 zur Aufnahme eines zu applizierenden Elementes auf. Der Aufbauteil 15 enthält drei Kerne 25a, 25b, 25c, die bezüglich der Mittelachse M drehachsensymmetrisch und mit einem Neigungswinkel α von 5 bis 25° angeordnet sind. Besonders bevorzugt ist dabei ein Neigungswinkel α von 15°. Fig. 9 zeigt einen Schnitt durch das in Fig. 8 gezeigte Implantat, um die drei Kerne 25a, 25b, 25c besser zu verdeutlichen. Die drei Kerne 25a, 25b, 25c ermöglichen einem Zahnarzt bei einer schwierigen Kieferlage, wie beispielsweise bei einem bezüglich der Schneidefläche der Zähne abgewinkelten Kieferknochen, ein abgewinkeltes Implantat zu schleifen. Dies, ohne dass der sonst bei vorgefertigten abgewinkelten Implantaten notwendige 360° Winkel eingehalten werden muss, um das Implantat in die richtige Position zu bringen. Dadurch wird das Knochengewebe geschont, was eine gute Knochenintegration ermöglicht. Das Prothetikelement wird nach dem Beschleifen aufzementiert. Alternativ kann mittig zwischen den drei Kernen 25a, 25b und 25c zusätzlich eine Öffnung mit oder ohne Gewinde angeordnet sein, die eine Befestigung eines Prothetikelementes erleichtert.

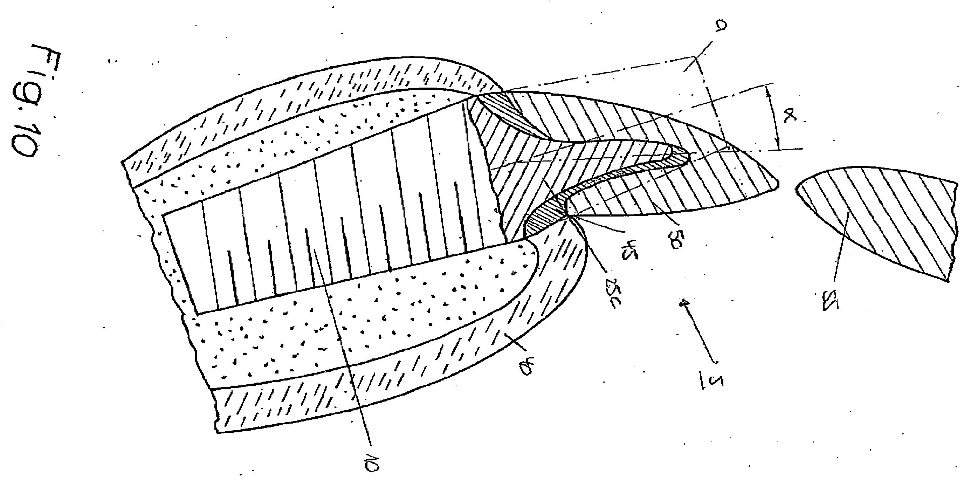

In Figur 10 wird schliesslich ein gemäss Fig. 8 implantiertes und beschliffenes Implantat 5 gezeigt, das mit einer Krone 50 versehen wurde. Durch das erfindungsgemässe Implantat 5 ist es möglich, den Aufbauteil 15 so abzuschleifen, dass die Krone trotz abgewinkeltem Kieferknochen unter Einhaltung der Stabilität genau auf den Gegenzahn 55 ausgerichtet ist, was für einen optimalen Biss eine Notwendigkeit ist.

## Patentansprüche

1. Einteiliges und einstückiges Keramik-Dentalimplantat (5) mit einem Verankerungsteil (10) zur Verankerung im Knochen und mit einem Aufbauteil (15) zur Aufnahme eines zu applizierenden Elementes, wobei der Aufbauteil (15) wenigstens einen Kern (25) und eine Deckschicht (30) aufweist, wobei die Deckschicht (30) eine bezüglich der Stabilität des Dentalimplantats (5) eine optionale Schicht darstellt, die bei Verwendung gegebenenfalls vollständig abgeschliffen sein kann, und der wenigstens eine Kern (25) und die Deckschicht (30) visuell voneinander verschieden sind.

2. Einteiliges Dentalimplantat (5) gemäss Anspruch 1, **dadurch gekennzeichnet, dass** zwischen dem wenigstens einen Kern (25) und der Deckschicht (30) eine Zwischenschicht angeordnet ist, die visuell von dem wenigstens einen Kern (25) und der Deckschicht (30) verschieden ist.

3. Einteiliges Dentalimplantat gemäss einem der Ansprüche 1 oder 2, **dadurch gekennzeichnet, dass** der Aufbauteil (15) genau einen Kern (25) und eine Deckschicht (30) aufweist.

4. Einteiliges Dentalimplantat gemäss einem der Ansprüche 1 oder 2, **dadurch gekennzeichnet, dass** der Aufbauteil (15) mehrere Kerne (25) und eine Deckschicht (30) aufweist.

5. Einteiliges Dentalimplantat gemäss Anspruch 4, **dadurch gekennzeichnet, dass** der Aufbauteil drei Kerne (25a, 25b, 25c) und eine Deckschicht (30) aufweist.

6. Einteiliges Dentalimplantat (5) gemäss Anspruch 5, **dadurch gekennzeichnet, dass** die drei Kerne drehachsensymmetrisch zueinander angeordnet sind.

7. Einteiliges Dentalimplantat (5) gemäss Anspruch 6, **dadurch gekennzeichnet, dass** die drei Kerne mit einem Neigungswinkel von 5 bis 25° von der Mittelachse weggerichtet angeordnet sind.

8. Einteiliges Dentalimplantat (5) gemäss Anspruch 7, **dadurch gekennzeichnet, dass** der Neigungswinkel 15° beträgt.

9. Einteiliges Dentalimplantat (5) gemäss einem der Ansprüche 4 bis 8, **dadurch gekennzeichnet, dass** sich die Kerne 25a, 25b, 25c visuell voneinander unterscheiden.

10. Einteiliges Dentalimplantat (5) gemäss einem der vorangehenden Ansprüche, **dadurch gekennzeichnet, dass** der Kern (25) einen Farbstoff ausgewählt aus der Gruppe bestehend aus Eisenoxid, Eisennitrat, Bismuthoxid, Ceroxid, Yttriumoxid, Erbiumoxid, Praesodymoxid, Praesodymnitrat, Zinkoxid, Vanadiumoxysulfat, metallischen Kupfer-Nanopartikeln und Mischungen enthält.

11. Einteiliges Dentalimplantat (5) gemäss einem der vorangehenden Ansprüche, **dadurch gekennzeichnet, dass** die Deckschicht (30) einen Farbstoff ausgewählt aus der Gruppe bestehend aus Eisenoxid, Eisennitrat, Bimuthoxid, Ceroxid, Yttriumoxid, Erbiumoxid, Praesodymoxid, Praesodymnitrat, Zinkoxid, Vanadiumoxysulfat und Mischungen davon enthält.

12. Einteiliges Dentalimplantat (5) gemäss einem der vorangehenden Ansprüche, **dadurch gekennzeichnet, dass** für die Deckschicht Aluminiumoxid verwendet wird.

13. Einteiliges Dentalimplantat (5) gemäss einem der vorangehenden Ansprüche, **dadurch gekennzeichnet, dass** für den mindestens einen Kern Yttrium stabilisiertes, polykristallines tetragonales Zirkonoxid verwendet wird.

14. Verfahren zur Herstellung eines einteiligen und einstückigen Keramik-Dentalimplantates (5) gemäss einem der vorangehenden Ansprüche, **dadurch gekennzeichnet, dass** ein Rohling mit dem Verankerungsteil und dem wenigstens einen Kern gespritzt wird, wobei der wenigstens eine Kern (25) ein Farbpigment enthält und auf den wenigstens einen Kern eine Deckschicht (30) gespritzt und anschliessend gesintert wird.

## Claims

1. A one-part and one-piece ceramic dental implant (5) with an anchoring part (10) for anchoring in the bone and with a build-on part (15) for receiving an element to be applied, the build-on part (15) having at least one core (25) and a covering layer (30), wherein, in terms of the stability of the implant (5), the covering layer (30) constitutes an optional layer which, when used and where appropriate, may be ground off completely, and wherein the at least one core (25) and the covering layer (30) are visually different from one another.

2. The one-part dental implant (5) as claimed in claim 1, wherein, between the at least one core (25) and the covering layer (30), an intermediate layer is arranged which is visually or acoustically different from the at least one core (25) and the covering layer (30).

3. The one-part dental implant as claimed in one of claims 1 or 2, wherein the build-on part (15) has exactly one core (25) and a covering layer (30).

4. The one-part dental implant as claimed in one of claims 1 or 2, wherein the build-on part (15) has a plurality of cores (25) and a covering layer (30).

5. The one-part dental implant as claimed in claim 4, wherein the build-on part has three cores (25a, 25b, 25c) and a covering layer (30).

6. The one-part dental implant (5) as claimed in claim 5, wherein the three cores are arranged symmetrically to an axis of rotation with respect to one another.

7. The one-part dental implant (5) as claimed in claim 6, wherein the three cores are arranged so as to be directed away from the mid-axis at an angle of inclination of 5 to 25°.

8. The one-part dental implant (5) as claimed in claim 7, wherein the angle of inclination amounts to 15°.

9. The one-part dental implant (5) as claimed in one of claims 4 to 8, wherein the cores (25a, 25b, 25c) differ visually from one another.

10. The one-part dental implant (5) as claimed in one of the preceding claims, wherein the core (25) contains a coloring substance selected from the group consisting of iron oxide, iron nitrate, bismuth oxide, cerium oxide, yttrium oxide, erbium oxide, praseodymium oxide, praseodymium nitrate, zinc oxide, vanadium oxysulfate, metallic copper nanoparticles and mixtures.

11. The one-part dental implant (5) as claimed in one of the preceding claims, wherein the covering layer (30) contains a coloring substance selected from the group consisting of iron oxide, iron nitrate, bismuth oxide, cerium oxide, yttrium oxide, erbium oxide, praseodymium oxide, praseodymium nitrate, zinc oxide, vanadium oxysulfate and mixtures thereof.

12. The one-part dental implant (5) as claimed in one of the preceding claims, wherein aluminum oxide is used for the covering layer.

13. The one-part dental implant (5) as claimed in one of the preceding claims, wherein yttrium-stabilized polycrystalline tetragonal zirconium oxide is used for the at least one core.

14. A method for producing a one-part dental implant (5) as claimed in one of the preceding claims, wherein a green body is injection-molded with the anchoring part and the at least one core, the at least one core (25) containing a coloring pigment, and a covering layer (30) being molded onto the at least one core and subsequently being sintered.

## Revendications

1. Implant dentaire céramique en une partie et monobloc (5) avec une partie d'ancrage (10) pour ancrer dans l'os et avec une partie de montage (15) pour recevoir un élément à monter, la partie de montage (15) ayant au moins un coeur (25) et une couche couvrante (30), la couche couvrante (30) constituant en terme de stabilité de l'implant (5) une couche optionnelle qui, le cas échéant, peut être complètement abrasée lors de l'utilisation, et le au moins un coeur (25) et la couche couvrante (30) étant visuellement différents l'un de l'autre.

2. Implant dentaire en une partie (5) selon la revendication 1, **caractérisé en ce qu'**une couche intermédiaire qui est visuellement ou acoustiquement différente du au moins un coeur (25) et de la couche couvrante (30) est disposée entre le au moins un coeur (25) et la couche couvrante (30).

3. Implant dentaire en une partie selon l'une des revendications 1 ou 2, **caractérisé en ce que** la partie de montage (15) a exactement un coeur (25) et une couche couvrante (30).

4. Implant dentaire en une partie selon l'une des revendications 1 ou 2, **caractérisé en ce que** la partie de montage (15) a plusieurs coeurs (25) et une couche couvrante (30).

5. Implant dentaire en une partie selon la revendication 4, **caractérisé en ce que** la partie de montage a trois coeurs (25a, 25b, 25c) et une couche couvrante (30).

6. Implant dentaire en une partie (5) selon la revendication 5, **caractérisé en ce que** les trois coeurs sont disposés symétriquement par rapport à un axe de rotation les uns par rapport aux autres.

7. Implant dentaire en une partie (5) selon la revendication 6, **caractérisé en ce que** les trois coeurs sont disposés s'éloignant de l'axe central avec un angle d'inclinaison de 5 à 25°.

8. Implant dentaire en une partie (5) selon la revendication 7, **caractérisé en ce que** l'angle d'inclinaison s'élève à 15°.

9. Implant dentaire en une partie (5) selon l'une des revendications 4 à 8, **caractérisé en ce que** les coeurs (25a, 25b, 25c) diffèrent visuellement les uns des autres.

10. Implant dentaire en une partie (5) selon l'une des revendications précédentes, **caractérisé en ce que** le coeur (25) contient un colorant sélectionné dans le groupe consistant en oxyde de fer, nitrate de fer, oxyde de bismuth, oxyde de cérium, oxyde d'yttrium, oxyde d'erbium, oxyde de praséodyme, nitrate de praséodyme, oxyde de zinc, oxysulfate de vanadium, nanoparticules de cuivre métallique et des mélanges.

11. Implant dentaire en une partie (5) selon l'une des revendications précédentes, **caractérisé en ce que** la couche couvrante (30) contient un colorant sélectionné dans le groupe consistant en oxyde de fer, nitrate de fer, oxyde de bismuth, oxyde de cérium, oxyde d'yttrium, oxyde d'erbium, oxyde de praséodyme, nitrate de praséodyme, oxyde de zinc, oxysulfate de vanadium et des mélanges de ceux-ci.

12. Implant dentaire en une partie (5) selon l'une des revendications précédentes, **caractérisé en ce que** de l'oxyde d'aluminium est utilisé pour la couche couvrante.

13. Implant dentaire en une partie (5) selon l'une des revendications précédentes, **caractérisé en ce que** du zircone polycristallin tétragonal stabilisé à l'yttrium est utilisé pour le au moins un coeur.

14. Méthode pour la production d'un implant dentaire en une partie (5) selon l'une des revendications précédentes, **caractérisée en ce qu'**une ébauche est moulée par injection avec la partie d'ancrage et le au moins un coeur, le au moins un coeur (25) contenant un pigment coloré et une couche couvrante (30) étant moulée sur le au moins un coeur et ensuite vitrifiée.
